# EUROPÄISCHE PATENTANMELDUNG

(11) **EP 1 059 328 A1**
(43) Veröffentlichungstag der Anmeldung: **13.12.2000**
(21) Anmeldenummer: 00810379.8
(22) Anmeldetag: 03.05.2000
(51) Int. Cl.: C08K 5/10, C08G 18/10

(54) **Einkomponenten-Polyurethanschäummassen mit verbesserter Aushärtung**

(30) Priorität: 09.06.1999 DE 19926312
(71) Anmelder: HILTI Aktiengesellschaft, 9494 Schaan (LI)
(72) Erfinder: Huber, Silvia, 86356 Neusäss (DE); Vogel, Peter, 86836 Untermeitingen (DE); Heimpel, Franz, 86444 Affing (DE)
(74) Vertreter: Wildi, Roland

(57) **Zusammenfassung**

Beschrieben werden eine Einkomponenten-Polyurethanschäummasse enthaltend mindestens ein Isocyanat-Gruppen aufweisendes Prepolymer (Isocyanat-Prepolymer), mindestens ein Treibmittel und an sich bekannte Hilfsmittel und Zusatzstoffe, welche mindestens einen von reaktiven Wasserstoffatomen freien Ester einer mehrwertigen C₂-C₇-Carbonsäure mit einem einwertigen C₁-C₇-Alkohol und/oder einer einwertigen C₁-C₇-Monocarbonsäure mit einem mehrwertigen C₂-C₇-Alkohol als Mittel zur Verbesserung der vollständigen und versprödungsfreien Aushärtung auch bei tiefen Temperaturen und geringer Umgebungsfeuchtigkeit enthält, sowie die Verwendung dieser von reaktiven Wasserstoffatomen freien Ester zur Verbesserung der versprödungsfreien Aushärtung solcher Einkomponenten-Polyurethanschäummassen unter ungünstigen Bedingungen (Kälte und geringes Angebot an Umgebungsfeuchtigkeit).

## Beschreibung

Die vorliegende Erfindung betrifft eine Einkomponenten-Polyurethanschäummasse, die mindestens ein Isocyanat-Gruppen aufweisendes Prepolymer (Isocyanat-Prepolymer), mindestens ein Treibmittel und an sich bekannte Hilfs-Zusatzstoffe enthält, mit verbesserter versprödungsfreier Aushärtung auch bei tiefen Temperaturen und/oder geringer Umgebungsfeuchtigkeit unter den genannten Bedingungen und die Verwendung von bestimmten, von reaktiven Wasserstoffatomen freien Estern als Mittel zur Verbesserung der versprödungsfreien Aushärtung dieser Einkomponenten-Polyurethanschäummassen unter den genannten Bedingungen.

Aus der EP-A-0 480 342 ist eine Einkomponentenmischung zur Herstellung von Polyurethanschaum zur Anwendung aus einem Druckbehälter bekannt, welche ein Isocyanatgruppen enthaltendes Prepolymer aus einem Polyol und einem Polyisocyanat mit einer bestimmten dynamischen Viskosität, übliche Bestandteile und Hilfsmittel sowie 0,5 bis 35,0 Gew.-% He, Ne, Ar, N₂, O₂, CO₂, N₂O/oder Luft als Vorschäum- und Treibgas enthält. Weiterhin ist angegeben, daß es vorteilhaft sein kann, mit geringen Zusätzen an die Viskosität vermindernden und niedrig siedenden Lösungsmitteln zu arbeiten, wie Estern, niedrig siedenden Estern, wie Methylacetat oder Ethylacetat, Ketonen und fluorierten Kohlenwasserstoffen.

Gegenstand der EP-A-0 200 801 ist eine Einkomponenten-Beschichtungsmasse zur Erzeugung von Schutzüberzügen, die neben einem Isocyanat-Prepolymer Weichmacher, Anti-Absetzmittel, blättchenförmige Extender, farbgebende Pigmente, feuchtigkeitsbindende Mittel und aliphatische Ester enthält. Die aliphatischen Ester dienen dazu, das Bindemittel zu strecken (reiner Löser), die erforderliche Verarbeitungsviskosität zu gewährleisten und das teilweise Lösungsmittel-empfindliche Substrat ausreichend, jedoch nicht übermäßig anzugreifen. Allerdings lehrt dieser Stand der Technik keine Einkomponenten-Beschichtungsmassen, die ein Treibmittel enthalten und einen Polyurethanschaum ergeben.

Einkomponenten-Polyurethanschäume werden überwiegend im Baubereich beispielsweise zum Füllen, Dämmen oder Befestigen von Türen, Fenstern und dergleichen verwendet. Für die Herstellung dieser Produkte wird üblicherweise ein Isocyanat-Gruppen enthaltendes Prepolymer (Isocyanat-Prepolymer) zusammen mit einem oder mehreren Treibmitteln und üblichen Zusätzen in einen Druckbehälter abgefüllt. Das vom Anwender aus dem Druckbehälter ausgebrachte aufschäumende Prepolymer härtet unter Einwirkung der Umgebungsfeuchtigkeit aus. Dabei wird die Reaktion der im Prepolymer vorhandenen Isocyanatgruppen mit dem Wasser der Umgebungsfeuchtigkeit für die Polymerisation des Prepolymers ausgenutzt.

Wegen der Abhängigkeit des Reaktionspartners Wasser von den Umgebungsbedingungen (Temperatur, Luftfeuchtigkeit, Luftbewegung und dergleichen) reagieren solche Einkomponenten-Polyurethanschäummassen sehr sensibel auf ein zu geringes Angebot des Reaktionspartners Wasser. Dieses Problem tritt insbesondere dann auf, wenn die in Rede stehende Einkomponenten-Polyurethanschäummasse bei tiefen Temperaturen eingesetzt werden soll. Bei tiefen Temperaturen sind naturgemäß die Reaktionsgeschwindigkeiten geringer und zum anderen auch das Feuchtigkeitsangebot aus der Umgebung niedriger. Demzufolge wird üblicherweise empfohlen, den mit der Polyurethanschäummasse zu behandelnden Untergrund zunächst zu befeuchten. Dies stellt jedoch einen die Produktivität beeinträchtigenden für den Anwender zusätzlichen Arbeitsgang dar. Bei Temperaturen bei oder unterhalb des Gefrierpunktes ist zudem das Befeuchten des Untergrundes wegen der Gefrierpunktunterschreitung des Wassers nicht mehr möglich.

Das sichtbarste Anzeichen dieses Effekts des mangelhaften Wasserangebotes ist eine langsamere, ungleichmäßige bzw. unvollständige Aushärtung des Schaums sowie eine mehr oder weniger starke Versprödung während der Aushärtung des Polyurethanschaums. Die unvollständige Aushärtung des Schaums kann als Spätfolge zu einer Nachexpansion bei höheren Temperaturen und einer damit verbundenen Schädigung des Bauteils führen.

Die Aufgabe der vorliegenden Erfindung besteht somit darin, das Problem der Aushärtung solcher Einkomponenten-Polyurethanschäummassen bei vermindertem Wasserangebot, sei es aufgrund geringerer Luftfeuchtigkeit und/oder tiefen Temperaturen zu verbessern, so daß eine versprödungsfreie vollständige Aushärtung auch bei tiefen Temperaturen sichergestellt werden kann.

Es hat sich gezeigt, daß diese Aufgabe dadurch gelöst werden kann, daß man der Einkomponenten-Polyurethanschäummasse bestimmte Ester zusetzt, nämlich von reaktiven Wasserstoffatomen, also von Hydroxy-, Mercapto-, Amino-, Imino- und/oder Carboxyl-Gruppen freie Ester einer mehrwertigen C₂-C₇-Carbonsäure mit einem einwertigen C₁-C₇-Alkohol und/oder umgekehrt einer einwertigen C₁-C₇-Monocarbonsäure mit einem mehrwertigen C₂-C₇-Alkohol.

Es hat sich überraschenderweise erwiesen, daß diese in der Einkomponenten-Polyurethanschäummasse enthaltenen Ester auch bei tiefen Temperaturen sehr leicht mit Wasser oder Umgebungsfeuchtigkeit reagieren und dabei in mehrere Moleküle mit reaktiven Gruppen, d.h. Gruppen, die mit den Isocyanatgruppen des Isocyanats reagieren, zerfallen, beispielsweise Hydroxygruppen, Carboxyhydrolgruppen, oder NH-Gruppen. Aufgrund der Reaktion des Esters mit Wasser stehen aufgrund der Anwendung von mehrwertigen Carbonsäuren bzw. mehrwertigen Alkoholen nach der Umsetzung mehr reaktive Gruppen zur Verfügung als vorher, welche dann direkt mit den Isocyanatgruppen des Isocyanat-Prepolymers reagieren. Es hat sich gezeigt, daß die bevorzugten erfindungsgemäß eingesetzten Ester derart stark mit Wasser reagieren, daß die sonst übliche Wasser-Isocyanat-Reaktion bei der Aushärtung der Einkomponenten-Polyurethanschäummasse umgangen und direkt eine Reaktion mit den reaktiven Reaktionsprodukten des eingesetzten Esters erreicht wird.

Gegenstand der vorliegenden Erfindung ist daher die Einkomponenten-Polyurethanschäummasse gemäß Anspruch 1. Die Unteransprüche betreffen bevorzugte Ausführungsformen dieses Erfindungsgegenstandes sowie die Verwendung der in Rede stehenden Ester als Mittel zur Verbesserung der versprödungsfreien Aushärtung haltigen Einkomponenten-Polyurethanschäummassen.

Die Erfindung betrifft somit eine Einkomponenten-Polyurethanschäummasse, enthaltend mindestens ein Isocyanat-Gruppen aufweisendes Prepolymer (Isocyanat-Prepolymer), mindestens ein Treibmittel und an sich bekannte Hilfs- und Zusatzstoffe, die gekennzeichnet ist durch einen Gehalt an mindestens einem von reaktiven Wasserstoffatomen freien Ester einer mehrwertigen C₂-C₇-Carbonsäure mit einem einwertigen C₁-C₇-Alkohol und/oder einer einwertigen C₁-C₇-Monocarbonsäure mit einem mehrwertigen C₂-C₇-Alkohol als Mittel zur Verbesserung der vollständigen und versprödungsfreien Aushärtung auch bei tiefen Temperaturen und/oder geringem Feuchtigkeitsangebot aus der Umgebung (geringer Umgebungsfeuchtigkeit).

Der erfindungsgemäß eingesetzte, von reaktiven Wasserstoffatomen freie Ester ist ein Ester, der frei ist von Gruppen, die mit den freien Isocyanat-gruppen des Isocyanat-Prepolymers reagieren, d.h. frei von Hydroxygruppen, Carboxylgruppen oder auch Aminogruppen.

Gemäß einer bevorzugten Ausführungsform der Erfindung enthält die Polyurethanschäummasse einen oder mehrere Ester einer gesättigten oder ungesättigten aliphatischen C₂-C₇-Dicarbonsäure mit mindestens einem C₁-C₇-Monoalkohol und/oder mindestens einem Ester einer gesättigten oder ungesättigten aliphatischen C₁-C₇-Monocarbonsäure mit mindestens einem C₂-C₇-Polyalkohol, vorzugsweise einem C₂-C₇-Dialkohol.

Erfindungsgemäß besonders bevorzugte Ester sind die Ester der Oxalsäure, Malonsäure, Bernsteinsäure, Glutarsäure, Pimelinsäure, Suberinsäure, Citronensäure, Äpfelsäure, Maleinsäure, Fumarsäure, Citraconsäure, Mesaconsäure mit mindestens einem einwertigen Alkohol, wie Methanol, Ethanol, Propanol, Isopropanol, n-Butanol, sec-Butanol, tert-Butanol, Pentaerythrit, Pentanol, Hexanol oder Heptanol oder ein Ester der Ameisensäure, Essigsäure, Propionsäure, Buttersäure, Isobuttersäure, Valeriansäure, Isovaleriansäure, Pivalinsäure, Hexansäure oder Heptansäure mit mit mindestens einem mehrwertigen Alkohol, wie Ethylenglykol, Propylenglykol, Butandiol, Pentandiol, Glycerol (Glycerin) oder Pentaerythrit.

Besonders bevorzugte Ester sind Dimethyloxalat, Diethyloxalat, Dipropyloxalat, Dibutyloxalat, Dimethylmalonat, Diethylmalonat, Dipropylmalonat, Dibutylmalonat, Dimethylmaleinat, Diethylmaleinat, Dipropylmaleinat, Dibutylmaleinat, Glyceroltriformiat, Glyceroltriacetat, Glyceroltripropionat, Dimethylsuccinat, Diethylsuccinat, Dipropylsuccinat, Dibutylsuccinat, Trimethylacetylcitrat, Triethylacetylcitrat, Tripropylacetylcitrat und Tributylacetylcitrat.

Die erfindungsgemäße Einkomponenten-Polyurethanschäummasse kann einen der in Rede stehenden Ester oder aber auch Gemische aus zwei oder mehreren Estern dieser Art enthalten.

Der Ester ist vorzugsweise in einer Menge von 0,5 bis 10 Gew.-%, vorzugsweise von 1 bis 6 Gew.-% und noch bevorzugter in einer Menge von 1,5 bis 3 Gew.-%, bezogen auf das Gewicht des Isocyanat-Prepolymers vorhanden.

Das in der erfindungsgemäßen Einkomponenten-Polyurethanschäummasse enthaltene, Isocyanat-Gruppen aufweisende Prepolymer (Isocyanat-Prepolymer) ist dem Fachmann an sich bekannt. Solche Prepolymere sind im Handel erhältlich und werden üblicherweise hergestellt durch die Umsetzung eines oder mehrerer Polyole, beispielsweise eines Hydroxylgruppen enthalten Polyesters oder Polyethers, mit einem oder mehreren Polyisocyanaten, wobei die Reaktion soweit geführt wird, daß noch freie Isocyanatgruppen in dem Produkt enthalten sind, also ein Prepolymer erzeugt wird. Vorzugsweise enthält das Isocyanat-Prepolymer 2 bis 25 Gew.-%, bevorzugter 8 bis 18 Gew.-%, besonders bevorzugt 10 bis 12 Gew.-% Isocyanatgruppen, bezogen auf das Gewicht des Prepolymers.

Unter einem Isocyanat-Prepolymer wird ein Oligomeres mit reaktiven NCO-Gruppen verstanden, welches als Voraddukt aus mindestens einem Polyisocyanat und mindestens einem Polyol der oben definierten Art gebildet ist. Als Polyole können alle zur Herstellung von Prepolymeren üblichen hydroxylgruppenhaltigen Polyester und Polyether (langkettige Polyole) mit einer OH-Funktionalität von > 1 bis 4, insbesondere 2 bis 3, sowie kurzkettige Diole verwendet werden.

Als Polyester-Polyole können Ester von Dicarbonsäuren, bevorzugt aliphatischen Dicarbonsäuren mit 4 bis 8 Kohlenstoffatomen im Alkylenrest, die mit Diolen umgesetzt werden, Anwendung finden, wobei diese ebenfalls freie OH-Gruppen zur Reaktion aufweisen müssen. Beispiele für aliphatische Dicarbonsäuren sind Pimelinsäure, Glutarsäure, Azelainsäure, Sebacinsäure, sowie vorzugsweise Bernstein- und Adipinsäure und aromatische Dicarbonsäuren wie Phthalsäure und Terephthalsäure. Als zweiwertige Alkohole können Ethylenglykol, Diethylenglykol, 1,2- bzw. 1,3-Propylenglykol, Dipropylenglykol, 1,4-Butandiol und 1,6-Hexandiol zur Anwendung kommen.

Es können aber auch Polyesterpolyole oleochemischer Herkunft verwendet werden, die keine freien Epoxidgruppen aufweisen und durch vollständige Ringöffnung von epoxidierten Triglyceriden eines wenigstens teilweise olefinisch ungesättigten Fettsäure enthaltenden Fettsäuregemisches mit einem oder mehreren Alkoholen mit 1 bis 12 C-Atomen und anschließender partieller Umesterung der Triglyceridderivate zu Alkylesterpolyolen mit 1 bis 12 C-Atomen im Alkylrest hergestellt worden sind (siehe DE 36 26 223).

Als Polyether-Polyole können die nach dem bekannten Verfahren aus einem oder mehreren Alkylenoxiden mit 2 bis 4 Kohlenstoffatomen im Alkylenrest und einem Startermolekül, das 2 aktive Wasserstoffatome enthält, hergestellten Produkte Verwendung finden. Geeignete Alkylenoxide sind beispielsweise Tetrahydrofuran, 1,3-Propylenoxid, 1,2- bis 2,3-Butylenoxid und Ethylenoxid. Als Startermoleküle kommen in Betracht: Wasser, Dicarbonsäuren, mehrwertige Alkohole wie Ethylenglykol, Propylenglykol, 1,2-Diethylenglykol, Dipropylenglykol und Dimerdiole.

Die langkettigen Diole aus den oben genannten Bausteinen haben ein Molekulargewicht von mehr als 1000, insbesondere 2000 bis 6000 (Gelchromatographie). Sie werden in einer Menge von 0 bis 20, vorzugsweise 0,2 bis 5 OH-Äquivalenten pro NCO-Gruppe eingesetzt.

Die kurzkettigen Diole werden in einer Menge von 0 bis 10, insbesondere 1 bis 3 OH-Äquivalenten pro NCO-Gruppe eingesetzt. Sie haben ein Molekulargewicht von weniger ab 1000, insbesondere weniger als 100. Konkrete Beispiele sind die Diole, die zur Herstellung der langkettigen Diole verwendet wurden.

Das Isocyanat-Prepolymer kann auch aus dem Polyisocyanat und Verbindungen hergestellt werden, die andere NCO-reaktive Gruppen tragen als die OH-Gruppe, z. B, COOH-, SH-, NH₂- oder NH-Gruppen. Vorzugsweise beträgt die NCO-Funktionalität 1 bis 4, vorzugsweise 1,5 bis 2,5, insbesondere 2.

Aus den Polyisocyanaten und den Diolen werden auf bekannte Art und Weise die Isocyanat-Prepolymeren hergestellt. Als Katalysatoren werden solche eingesetzt, die die Reaktion der Isocyanatgruppe mit der OH-Gruppe, insbesondere mit Wasser, beschleunigen, nicht jedoch deren Trimerisierung. Konkrete Beispiele sind Dimorpholinodiethylether, Bisdimethylaminoethylether, Dabco X-DM (Fa. Air Products) sowie N-Ethylmorpholin. Unter Umständen können aber auch andere Katalysatoren in Frage kommen, wenn sie die Isocyanatgruppen während der Lagerung nicht trimerisieren, z. B. N-substituierte Morpholine sowie deren Mischungen mit Propylenoxid-Addukten des Triethanolamins, sowie die bekannten Metallkatalysatoren, insbesondere solche des Zinns.

Für die Herstellung des Isocyanat-Prepolymers kann man als Polyisocyanat die handelsüblichen Diisocyanate und Triisocyanate einsetzen, beispielsweise die mit der Handelsbezeichnung Desmodur®, Lupranat® oder Suprasec® vertriebenen Polyisocyanate, Toluylendiisocyanate (2,4-und/oder 2, 6-Toluylendiisocyanat), Isophorondiisocyanat, Di-und Polyphenylpolymethylenpolyisocyanat, Hexamethylen-1,6-diisocyanat oder Diphenylmethan-4,4-diisocyanat und Mischungen daraus.

Unabhängig von der Art ihrer Herstellung sind die reaktiven Isocyanat-Prepolymeren insbesondere durch folgende Merkmale charakterisiert: Sie haben eine NCO-Funktionalität von 2 bis 6, bevorzugter 2,7 bis 5, insbesondere von 2,8 bis 4 und einen NCO-Gehalt von 2 bis 25 Gew.-% bevorzugter von 8 bis 18 Gew.-%, insbesondere von 10 bis 12 Gew.-% bezogen auf das Gewicht des Isocyanat-Prepolymern, sowie eine Viskosität von 5 bis 200, insbesondere von 10 bis 100 Pa·s, gemessen bei 25°C nach DIN 53 015.

Vorzugsweise besitzt das Isocyanat-Prepolymer ein Molekulargewicht von 500 bis 30.000, vorzugsweise von 1.000 bis 25.000.

Die Zusammensetzung besteht notwendigerweise aus mindestens einem Polyisocyanat-Prepolymer, mindestens einem Treibmittel, gegebenenfalls an sich bekannten Hilfs- und Zusatzstoffen, wie einem oder mehreren Katalysatoren für die Reaktion der Isocyanat-Gruppe mit der OH-Gruppe, insbesondere mit Wasser, und mindestens einen der definierten von reaktiven Wasserstoffatomen freien Ester. Darüber hinaus können noch weitere Additive zugesetzt werden, z. B. Lösungsmittel, Flammschutzmittel, Weichmacher, Zellregler und Alterungsschutzmittel. Es entsteht eine Lösung oder Emulsion.

Als Katalysator wird vorzugsweise Dimorpholinodiethylether oder Bis(dimethylaminoethyl)-ether eingesetzt. Er soll nur die Reaktion der NCO-Gruppe mit OH-Gruppen katalysieren, nicht dagegen deren Trimerisierung bei der Lagerung.

Als Schaumstabilisator werden vorzugsweise Siloxan-Oxyalkylen-Copolymeren, z. B. Tegostab B 8404 (Fa. Goldschmidt) oder Dabco DC-190, DC-193, eingesetzt.

Als Flammschutzmittel werden vorzugsweise eingesetzt: Tris(2-chlorpropyl)-phosphat, Tris(chlorethyl)-phosphat, Diphenylkresylphosphat, DMMP und DEEP verwendet.

Als Treibmittel für die erfindungsgemäße Einkomponenten-Polyurethanschäummasse geeignet sind neben Luft, Stickstoff, Kohlendioxid, Distickstoffoxid vorzugsweise bei Raumtemperatur in flüssiger Form vorliegende Gase und Flüssigkeiten, die gegenüber den weiteren Bestandteilen der Polyurethanschäummasse inert sind und Siedepunkte unterhalb 50°C, insbesondere zwischen -50°C und 30°C aufweisen sowie Mischungen aus gasförmigen und flüssigen Treibmitteln. Beispiele derartiger, vorzugsweise verwendbarer Gase und Flüssigkeiten sind Alkane, wie z.B. Propan, n- und iso-Butan, n- und iso-Pentan, vorzugsweise technische Gemische aus n- und iso-Pentan, und Cyclopentan, Alkylether, wie z.B. Dimethylether, Diethylether und Methylisobutylether, Carbonsäurealkylester, wie z.B. Methylformiat und halogenierte, vorzugsweise fluorierte Kohlenwasserstoffe wie z.B. Dichlorfluormethan, Trifluormethan, 1,1-Dichlor-1-fluorethan, Monochlortrifluorethan, Monochlordifluorethan, Difluorethan, Dichlortrifluorethan, Monochlortetrafluorethan, Pentafluorethan, Tetrafluorethan, Dichlormonofluorethan, 1,1,1,2-Tetrafluoroethan und/oder 1,1,1,2,3,3,3-Heptafluoropropan.

Als Treibmittel verwendbar sind ferner gegebenenfalls substituierte Monocarbonsäuren mit 1 bis 30 Kohlenstoffatomen, vorzugsweise aliphatische Monocarbonsäuren mit 1 bis 10 Kohlenstoffatomen. Als derartige Treibmittel beispielhaft genannt seien gegebenenfalls substituierte Monocarbonsäuren, wie z.B. Ameisen-, 2-Chlorpropion-, 3-Chlorpropion-, 2,2-Dichlorpropion-, Hexan-, Cyclohexan-, Dodecan-, Palmitin-, Stearin-, Öl-, Glykol-, Ricinol-, Tallölfettsäure und vorzugsweise Propionsäure, 2-Ethylhexansäure und insbesondere Essigsäure. Die organischen Carbonsäuren, die mit den Isocyanaten unter Bildung von Harnstoffen, Acylharnstoffen und Kohlendioxid reagieren, werden zweckmäßigerweise in Kombination mit Alkalimetall- oder Ammoniumsalzen von organischen Carbonsäuren oder Tris(dialkylaminoalkyl)-s-hexahydrotriazinen als Katalysatoren verwendet. Durch die Bildung von Kohlendioxid kann das Druckpolster aus Treibmittel im Druckgefäß auf vorteilhafte Weise vergrößert und durch die Bildung von Harnstoffgruppen können die mechanischen Eigenschaften des PU-Schaumstoffs modifiziert werden.

Die beispielhaft genannten Treibmittel können einzeln oder als Mischungen verwendet werden.

Im Gemisch mit Gasen und/oder Flüssigkeiten mit Siedepunkten unter 50° C verwendet werden können auch Cycloalkane, wie z.B. Hexan und Cyclohexan und Carbonsäurealkylester, wie z.B. Ethylformiat, mit Siedepunkten über 50°C, sofern die Treibmittelmischung zweckmäßigerweise einen Siedepunkt unter 50°C aufweist und eine Treibwirkung besitzt, die ausreichend ist, um die unter Druck stehende Einkomponenten-Polyurethanschäummasse aus dem Druckbehälter hinauszudrücken und zu einem Polyurethanschaumstoff aufzuschäumen. Als Treibmittel vorzugsweise verwendet werden Mischungen aus Alkanen, insbesondere Butan und/oder Propan, und einer Flüssigkeit mit einem Siedepunkt unter 50°C. Die erforderliche Menge an Treibmittel oder Treibmittelmischung kann in Abhängigkeit von der Art des Treibmittels oder der Treibmittelmischung sowie den Mischungsverhältnissen in einfacher Weise experimentell ermittelt werden.

Die Menge des Treibmittels in der erfindungsgemäßen Einkomponenten-Polyurethanschäummasse beträgt 2 bis 50 Gew.-%, bevorzugter 10 bis 30 Gew.-%.

Als an sich bekannte Hilfs- und Zusatzstoffe kann die erfindungsgemäße Einkomponenten-Polyurethanschäummasse oberflächenaktive Mittel, Flammschutzmittel, Stabilisatoren, Weichmacher, Katalysatoren, Lösungsmittel, Füllstoffe, Farbstoffe, Pigmente, Hydrolyseschutzmittel und fungistatisch und/oder bakteriostatisch wirkende Substanzen enthalten. Geeignete Flammschutzmittel sind beispielsweise Diphenylkresylphosphat, Trikresylphosphat, Tris(2-chlorethyl)phosphat, Tris(2-chlorpropyl)-phosphat, Tris(1,3-dichlorpropyl)-phosphat, Tris(2,3-dibrompropyl)-phosphat und Tetrakis(2-chlorethyl)-ethylendiphosphat.

Außer den genannten halogensubstituierten Phosphaten können auch anorganische Flammschutzmittel, wie z.B. Aluminiumoxidhydrat, Antimontrioxid, Arsenoxid, Ammoniumpolyphosphat, Blähgraphit und Calciumsulfat oder Cyanursäurederivate, wie z.B. Melamin oder Mischungen aus mindestens zwei Flammschutzmitteln, wie z.B. Ammoniumpolyphosphaten und Melamin und/oder Blähgraphit sowie gegebenenfalls Stärke zum Flammwidrignachen der aus der Einkomponenten-Polyurethanschäummasse erzeugten Schaumstoffe verwendet werden. Im allgemeinen hat es sich als zweckmäßig erwiesen 5 bis 50 Gew.-Teile, vorzugsweise 10 bis 40 Gew.-Teile der genannten Flammschutzmittel oder Flammschutzmittelmischungen bezogen auf jeweils 100 Gew.-Teile der Polyhydroxylverbindungen zu verwenden.

Als Weichmacher verwendbar sind beispielsweise die an sich bekannten weichmachend wirkenden Mittel wie z.B. Butylbenzylphthalat oder Dioctylphthalat. Dabei hat es sich als vorteilhaft erwiesen, beispielsweise die vorgenannten hydroxylgruppenhaltigen Polyester oder phosphor- und/oder halogenhaltige Verbindungen, wie z.B. die vorgenannten Flammschutzmittel zu verwenden, da diese zusätzlich die Flammwidrigkeit der erzeugten Schaumstoffe vergrößern.

Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe wie Z.B. silikatische Mineralien, beispielsweise Schichtsilikate, wie Antigorit, Serpentin, Hornblenden, Amphibole, Chrysotil, Zeolithe, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organische Füllstoffe können einzeln oder als Gemische verwendet werden und werden der Einkomponenten-Polyurethanschäummasse vorteilhafterweise in Mengen von 0,5 bis 50 Gew.%, vorzugsweise 1 bis 10 Gew. -%, bezogen auf das Gewicht der Einkomponenten-Polyurethanschäummasse einverleibt.

Nähere Angaben über die oben genannten anderen üblichen Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1, und 2. Auflage, 1966 und 1983 zu entnehmen.

Die erfindungsgemäße Einkomponenten-Polyurethanschäummasse setzt sich quantitativ vorzugsweise folgendermaßen zusammen (in Gew.-%):
- 50 bis 90, vorzugsweise 60 bis 85 des Isocyanat-Prepolymers,
- 0,1 bis 5,0, vorzugsweise 0,5 bis 20 an Katalysatoren,
- 5 bis 35, vorzugsweise 10 bis 25 an Treibmittel und
- 0,1 bis 5,0, vorzugsweise 0,5 bis 3,0 an Schaumstabilisator,
- 0 bis 20, vorzugsweise 3 bis 15 an Weichmacher und
- 0.5 bis 10, vorzugsweise 1 bis 6 an den von reaktiven Wasserstoffatomen freien Ester.

Von den fakultativen Additiven kann das Flammschutzmittel in einer Menge von 2 bis 50 Gew.-%, vorzugsweise von 5 bis 15 Gew.-% zugesetzt werden.

Die übrigen fakultativen Additive können in einer Menge von 0,1 bis 3,0 Gew.-% zugesetzt werden, insbesondere von 0,2 bis 1,5 Gew.-%. Ein weiterer Gegenstand der vorliegenden Erfindung ist die Verwendung von reaktiven Wasserstoffatomen freien Estern einer mehrwertigen C₂-C₇-Carbonsäure mit einem einwertigen C₁-C₇-Alkohol und/oder einer einwertigen C₁-C₇-Monocarbonsäure mit einem mehrwertigen C₂-C₇-Alkohol als Mittel zur Verbesserung der vollständigen und versprödungsfreien Aushärtung von treibmittelhaltigen Einkomponenten-Polyurethanschäummassen auf der Grundlage eines Isocyanat-Gruppen aufweisendem Prepolymers (Isocyanat-Prepolymer) auch bei tiefen Temperaturen und/oder geringer Umgebungsfeuchtigkeit.

Wie oben bereits ausgeführt, reagieren die erfindungsgemäß ausgewählten Ester der oben definierten Art mit dem vorhandenen Umgebungswasser wesentlich stärker als die Isocyanatgruppen des Isocyanat-Prepolymers, indem sie durch eine Hydrolysereaktion in die Carbonsäure und den Alkohol zerfallen, wobei sowohl die Carboxylgruppen der Carbonsäure als auch die Hydroxygruppen des Alkohols mit den Isocyanatgruppen des Isocyanat-Prepolymers reagieren und zu der gewünschten Aushärtung führen. Dabei hat sich gezeigt, daß die erfindungsgemäß eingesetzen Ester hygroskopisch sind und damit das Umgebungswasser anziehen und es für die angestrebte Aushärtungsreaktion besser nutzbar machen. Gleichzeitig vervielfacht sich die Anzahl der für die Aushärtung zur Verfügung stehenden reaktiven Gruppen, so daß auch der besonders bei tiefen Temperaturen naturgemäß niedrige Wassergehalt der Luft und damit das geringe Hydroxygruppenangebot erhöht wird und damit eine Aushärtung begünstigt wird, die damit schnell und vollständig abläuft.

Durch die erfindungsgemäß erreichte Verlagerung der direkten Reaktion des Umgebungswassers mit den Isocyanatgruppen des Isocyanat-Prepolymers zu einer Reaktion der gebildeten Carboxylgruppen bzw. Hydroxygruppen mit den Isocyanatgruppen wird die sonst in der Kälte auftretende temporäre Versprödungsphase während der Aushärtung vermieden. In dieser Weise gelingt es insbesondere unter Anwendung der erfindungsgemäß besonders bevorzugten Dialkyloxalsäureester, wie Dimethyloxalat oder Diethyloxalat bei sehr geringen Zugabemengen im Bereich von 1 bis 2%, bezogen auf das Isocyanat-Prepolymer eine enorme Verbesserung des Aushärteverhaltens vor allem bei niedrigen Temperaturen bis zu - 10°C zu erreichen. Bei Anwendung dieser geringen Mengen des Esters wird es ohne weiteres möglich, eine schnelle und vollständige Aushärtung des Isocyanat-Prepolymeren auch bei diesen niedrigen Temperaturen zu erreichen.

Erfindungsgemäß können also bestehende oder auch herkömmliche Prepolymerrezeptoren lediglich durch Zugabe der erfindungsgemäß eingesetzten Ester derart ausgerüstet werden, daß eine wesentlich problemlosere Aushärtung der Einkomponenten-Polyurethanschäummasse möglich wird, so daß auf eine Vorbefeuchtung des Untergrundes in der Regel verzichtet werden kann, wobei selbst bei tiefen Temperaturen die in dieser Weise modifizierten Schäume problemlos und versprödungsfrei aushärten.

Das folgende Beispiel dient der weiteren Erläuterung der Erfindung.

### Beispiel

Eine erfindungsgemäße Einkomponenten-Polyurethanschäummasse wird aus den folgenden Bestandteilen gebildet:
91,7 g eines Polyethylenglykoldiadipats mit einer Hydroxylzahl von 56,
33,4 g eines mit Glyzerin gestarteten Polyoxypropylenpolyols mit einer Hxdroxylzahl von 400,
30,6 g eines mit Glyzerin gestarteten Polyoxypropylenpolyols mit einer Hydroxylzahl von 42,
19,5 g eines Polyethylenglykols mit einem Molekulargewicht von 600,
8,3 g eines Polyoxyalkylenglykolpolysiloxancopolymers als Schaumstabilisator,
2,8 g Di-(2-morpholinoethyl)-ether,
91,7 g Trichlorpropylphosphat,
403,1 g Diphenylmethandiisocyanat (Roh-MDI),
73,7 g Tetrafluorethan,
40,3 g Dimethylether,
20,9 g Butan,
4,2 g Propan

Die obengenannten Bestandteile werden vermischt, wobei durch chemische Umsetzung das Prepolymer entsteht. Dieses wird in einen Druckbehälter eingebracht, aus dem die Einkomponenten-Polyurethanschäummasse unter der Wirkung des Treibmitteldrucks ausgebracht werden kann.

Die Prepolymerreaktion kann auch direkt im Druckbehälter erfolgen, d. h. die Rezepturbestandteile oder Vorgemische derselben werden in den Behälter gegeben, um dort zu reagieren und zu verbleiben.

Zur Überprüfung des Aushärtungsverhaltens wurde die obige Einkomponenten-Polyurethanschäummasse bzw. eine entsprechende Schäummasse ohne den Zusatz eines erfindungsgemäßen Esters bzw. unter Zusatz von Diethyloxalat, Dimethylmalonat, Diethylmaleinat, Glycerintriacetat, Dibuthyloxalat, Tributylacetylcitrat und Diethylsuccinat hergestellt und bei -10°C in einer Umgebungsatmosphäre mit einer relativern Feuchtigkeit von 75% während einer Zeitdauer von 24 Stunden ausgehärtet.

Anschließend wurde die Sprödigkeit in der Kälte als die Masse (in g) eines Metallzylinders mit einem Durchmesser von 19 mm angegeben, der bei - 10°C aus 27 cm Höhe auf einen Schaumstrang von 3 cm Durchmesser fallengelassen wird und dabei die Oberfläche zerstört. Höhere Werte bedeuten bessere Elastizität. Es wurden Metallzylinder mit folgenden Gewichtsabstufungen geprüft: 20 g, 40 g, 60 g, 80 g, 100 g, 150 g, 200g, 250 g, 300 g, 400 g.

Die hierbei erhaltenen Ergebnisse sind in der folgenden Tabelle zusammengestellt.

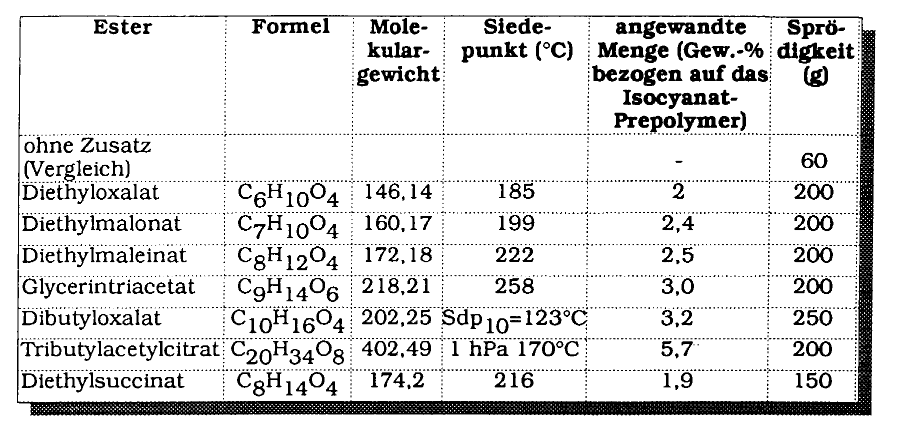

Wie die obige Tabelle erkennen läßt, läßt sich durch die Zugabe des erfindungsgemäß eingesetzten Esters eine deutliche Verbesserung im Hinblick auf eine versprödungsfreie Aushärtung auch bei tiefen Temperaturen erreichen.

## Patentansprüche

1. Einkomponenten-Polyurethanschäummasse, enthaltend mindestens ein Isocyanat-Gruppen aufweisendes Prepolymer (Isocyanat-Prepolymer), mindestens ein Treibmittel und an sich bekannte Hilfs- und Zusatzstoffe, **gekennzeichnet durch** einen Gehalt an mindestens einem von reaktiven Wasserstoffatomen freien Ester einer mehrwertigen C₂-C₇-Carbonsäure mit einem einwertigen C₁-C₇-Alkohol und/oder einer einwertigen C1-C7-Monocarbonsäure mit einem mehrwertigen C₂-C₇-Alkohol als Mittel zur Verbesserung der vollständigen und versprödungsfreien Aushärtung auch bei tiefen Temperaturen und/oder geringer Umgebungsfeuchtigkeit.

2. Einkomponenten-Polyurethanschäummasse nach Anspruch 1, **dadurch gekennzeichnet,** daß der Ester frei ist von Hydroxy- und/oder Carboxylgruppen.

3. Einkomponenten-Polyurethanschäummasse nach Anspruch 1 oder 2, **gekennzeichnet durch** einen Gehalt an einem Ester einer gesättigten oder ungesättigten aliphatischen C₂-C₇-Dicarbonsäure mit mindestens einem C₁-C₇-Monoalkohol und/oder einem Ester einer gesättigten oder ungesättigten aliphatischen C₁-C₇-Monocarbonsäure mit mindestens einem C₂-C₇-Polyalkohol.

4. Einkomponenten-Polyurethanschäummasse nach mindestens einem der Ansprüche 1 bis 3, **dadurch gekennzeichnet,** daß der Ester ein Ester der Oxalsäure, Malonsäure, Bernsteinsäure, Glutarsäure, Pimelinsäure, Suberinsäure, Citronensäure, Äpfelsäure, Maleinsäure, Fumarsäure, Citraconsäure, Mesaconsäure mit mindestens einem einwertigen Alkohol, wie Methanol, Ethanol, Propanol, Isopropanol, n-Butanol, sec-Butanol, tert-Butanol, Pentaerythrit, Pentanol, Hexanol oder Heptanol oder ein Ester der Ameisensäure, Essigsäure, Propionsäure, Buttersäure, Isobuttersäure, Valeriansäure, Isovaleriansäure, Pivalinsäure, Hexansäure oder Heptansäure mit mit mindestens einem mehrwertigen Alkohol, wie Ethylenglykol, Propylenglykol, Butandiol, Pentandiol, Glycerol oder Pentaerythrit ist.

5. Einkomponenten-Polyurethanschäummasse nach mindestens einem der vorhergehenden Ansprüche, **dadurch gekennzeichnet,** daß sie mindesten einen Ester aus der Dimethyloxalat, Diethyloxalat, Dipropyloxalat, Dibutyloxalat, Dimethylmalonat, Diethylmalonat, Dipropylmalonat, Dibutylmalonat, Dimethylmaleinat, Diethylmaleinat, Dipropylmaleinat, Dibutylmaleinat, Glyceroltriformiat, Glyceroltriacetat, Glyceroltripropionat, Dimethylsuccinat, Diethylsuccinat, Dipropylsuccinat, Dibutylsuccinat, Trimethylacetylcitrat, Triethylacetylcitrat, Tripropylacetylcitrat, Tributylacetylcitrat umfassenden Gruppe enthält.

6. Einkomponenten-Polyurethanschäummasse nach mindestens einem der vorhergehenden Ansprüche, **dadurch gekennzeichnet,** daß sie den Ester in einer Menge von 0,5 bis 10 Gew.-%, vorzugsweise von 1 bis 6 Gew.-%, noch bevorzugter 1,5 bis 3 Gew.-%, bezogen auf das Gewicht des Isocyanat-Prepolymers enthält.

7. Einkomponenten-Polyurethanschäummasse nach mindestens einem der vorhergehenden Ansprüche, **dadurch gekennzeichnet**, daß sie als Isocyanat-Prepolymer ein Prepolymer aus einem oder mehreren Polyolen und einem oder mehreren Polyisocyanaten mit einer NCO-Funktionalität von 2 bis 6, bevorzugter 2,7 bis 5, insbesondere von 2,8 bis 4 und einem Molekulargewicht von 500 bis 30.000, vorzugsweise von 1.000 bis 25.000 enthält.

8. Einkomponenten-Polyurethanschäummasse nach Anspruch 7, **dadurch gekennzeichnet,** daß das Isocyanat-Prepolymer einen Isocyanatgruppengehalt von 5 bis 25 Gew.-% , vorzugsweise von 8 bis 18 Gew.-%, insbesondere 10 bis 12 Gew.-%, bezogen auf das Gewicht des Isocyanat-Prepolymers, aufweist.

9. Einkomponenten-Polyurethanschäummasse nach mindestens einem der vorhergehenden Ansprüche, **dadurch gekennzeichnet,** daß sie als Treibmittel Luft, Stickstoff, Kohlendioxid, Distickstoffoxid, fluorierte und/oder chlorierte Kohlenwasserstoffe, insbesondere Dimethylether, Butan oder Propan enthält.

10. Einkomponenten-Polyurethanschäummasse nach Anspruch 9, **dadurch gekennzeichnet,** daß das Treibmittel in einer Menge von 2 bis 50 Gew.-%, bevorzugter von 10 bis 30 Gew.-%, bezogen auf die Einkomponenten-Polyurethanschäummasse vorhanden ist.

11. Einkomponenten-Polyurethanschäummasse nach mindestens einem der vorhergehenden Ansprüche, **dadurch gekennzeichnet,** daß sie als an sich bekannte Hilfs- und Zusatzstoffe oberflächenaktive Mittel Flammschutzmittel, Stabilisatoren, Weichmacher, Katalysatoren, Lösungsmittel, Füllstoffe, Farbstoffe, Pigmente, Hydrolyseschutzmittel und fungistatisch und/oder bakteriostatisch wirkende Substanzen enthält.

12. Verwendung von an reaktiven Wasserstoffatomen freien Estern einer mehrwertigen C₂-C₇-Carbonsäure mit einem einwertigen C₁-C₇-Alkohol und/oder einer einwertigen C₁-C₇-Monocarbonsäure mit einem mehrwertigen C₂-C₇-Alkohol als Mittel zur Verbesserung der vollständigen und versprödungsfreien Aushärtung von treibmittelhaltigen Einkomponenten-Polyurethanschäummassen auf der Grundlage eines Isocyanat-Gruppen enthaltenden Prepolymers (Isocyanat-Prepolymer) auch bei tiefen Temperaturen und/oder geringer Umgebungsfeuchtigkeit.
